# EUROPEAN PATENT APPLICATION

(11) **EP 2 733 068 A2**
(43) Date of publication of application: **21.05.2014**
(21) Application number: 13192754.3
(22) Date of filing: 13.11.2013
(51) Int. Cl.: B64C 27/02

(54) **A fixed winged aircraft with foldable auto-rotation rotor**

(30) Priority: 15.11.2012 IL 22307412
(71) Applicant: Aviron Consulting Development and Manufacture for Advanced Aviation, 84352 Be'er Sheva (IL)
(72) Inventor: Guetta, Abraham, 76850 Kfar Meishar, Nahal Sorek (IL)
(74) Representative: Petraz, Gilberto Luigi

(57) **Abstract**

The subject matter discloses a fixed wing aircraft (100) comprising one or more foldable auto-rotation rotors (130) operating on the fixed wing aircraft, each of the one or more foldable auto-rotation rotors comprising one or more foldable blades (135); the one or more foldable auto-rotation rotors are stopped while the fixed wing aircraft is flying; the one or more foldable auto-rotation rotors are started while the fixed wing aircraft is flying; the one or more foldable blades are folded while the fixed wing aircraft is flying; the one or more foldable blades are expanded while the fixed wing aircraft is flying; one or more masts (137), each of the one or more masts connects a foldable auto-rotation rotor of the one or more foldable auto-rotation rotors to the fixed wing aircraft; the one or more masts are foldable while the fixed wing aircraft is flying; the one or more masts are expanded while the fixed wing aircraft is flying; the one or more masts are positioned vertically and rearwards; a disk plane of the one or more auto-rotation rotors (130) is positioned vertically and rearwards with respect to the fixed wing aircraft during forward flight.

## Description

### FIELD OF THE INVENTION

The subject matter relates generally to a fixed winged aircraft comprising foldable auto-rotation rotors.

### BACKGROUND OF THE INVENTION

A fixed winged aircraft uses engines to create forward thrust and wings to create lift. Such fixed winged aircraft requires a runway in an airport to take off and land. The fixed winged aircraft is capable of achieving fast flying speeds, which enable reaching far distances over a short period of time. The fixed winged aircraft has a longer flight endurance and less vibrations during flight.

Rotorcrafts, such as helicopters, comprise engine powered rotors which enable flying the helicopter. The blade of the helicopter is angled forward to enable forward flight.

Unlike a helicopter, an autogyro is type of rotorcraft comprising a auto-rotation wing-blades angled slightly backwards, rather than forward, to create lift. The forward requires a forward engine thrust, which is not connected to the auto-rotation wing-blades. Due to the forward motion of the autogyro and the airflow through the auto-rotation wing-blades, the auto-rotation wing-blades create spinning and vertical lift. The auto-rotation wing-blades function very similarly to a windmill. The autogyro is enabled to achieve a landing in very steep angle and requires short taxing once the autogyro makes touchdown. The autogyro is enabled to achieve a vertical liftoff by pre-rotation of the auto-rotation wing-blades, or a very short takeoff run after pre-rotation. All rotorcrafts have vibrations during flight due to mechanical unbalance and uneven lift during spinning in forward flight.

### SUMMARY

It is an object of the subject matter to disclose a fixed wing aircraft, comprising:
a fixed wing aircraft comprising one or more foldable auto-rotation rotors operating on the fixed wing aircraft, each of the one or more foldable auto-rotation rotors comprising one or more foldable blades; one or more foldable auto-rotation rotors are stopped while the fixed wing aircraft is flying; one or more foldable auto-rotation rotors are started while the fixed wing aircraft is flying; one or more foldable blades are folded while the fixed wing aircraft is flying; one or more foldable blades are expanded while the fixed wing aircraft is flying; one or more masts, each of the one or more masts connects a foldable auto-rotation rotor of the one or more foldable auto-rotation rotors to the fixed wing aircraft; one or more masts are foldable while the fixed wing aircraft is flying; one or more masts are expanded while the fixed wing aircraft is flying; one or more masts are positioned vertically and rearwards; a disk plane of the one or more auto-rotation rotors is positioned vertically and rearwards with respect to the fixed wing aircraft during forward flight.

In some cases, the fixed wing aircraft comprises one or more sockets, each socket of the one or more sockets connecting each mast of the one or more masts to the fixed wing aircraft; each socket of the one or more sockets is enabled to move from a substantially vertical orientation to a horizontal orientation; each socket of the one or more sockets is enabled to move from the horizontal orientation to the substantially vertical orientation.

In some cases, the mast is configured to fold and expand along a vertical direction only.

In some cases, the fixed wing aircraft comprises one or more booms, each boom of the one or more booms comprises a cavity to store the foldable auto-rotation rotors of the one or more foldable auto-rotation rotors are stopped.

In some cases, the fixed wing aircraft comprises a wing, said wing further comprises one or more cavities, each cavity of the one or more cavities stores the foldable auto-rotation rotor the one or more foldable auto-rotation rotors.

In some cases, the one or more foldable auto-rotation rotors are connected to an engine to synchronize the rotation speed of the one or more foldable auto-rotation rotors;

In some cases, the fixed wing aircraft comprises a transceiver for receiving commands from a control unit controlling the one or more foldable auto-rotation rotors.

In some cases, the fixed wing aircraft comprises one or more booms, each boom of the one or more booms stores the foldable auto-rotation rotor of the one or more foldable rotation rotors; the one or more foldable blades of the foldable auto-rotation rotor of the one or more foldable auto-rotation rotors fold onto the sides of the boom of the one or more booms.

In some cases the foldable blades fold to enclose around the mast when the one or more foldable auto-rotation rotors are stopped.

It is an object of the subject matter to disclose a method for operating a fixed-wing aircraft, comprising:
taking off the fixed wing aircraft with foldable auto-rotation rotor functionalities, said foldable auto-rotation rotor comprises foldable blades; flying the fixed wing aircraft with foldable auto-rotation rotor functionalities; stopping the one or more foldable blades while flying the fixed wing aircraft; folding the one or more foldable blades while flying the fixed wing aircraft; flying the fixed wing aircraft with the foldable blades folded; expanding the foldable blades while flying the fixed wing aircraft; flying the fixed wing aircraft with one or more foldable blades expanded; landing the fixed wing aircraft with foldable auto-rotation rotor functionalities.

In some cases, the two foldable blades of the foldable auto-rotation rotors of the one or more foldable auto rotation rotors fold onto the sides of the boom of the one or more booms.

In some cases, the two foldable blades of the foldable auto-rotation rotor of the one or more foldable auto rotation rotors fold and rest the foldable auto-rotation rotor of the one or more foldable auto rotation rotors inside a cavity of the boom of the one or more booms;

In some cases the method further comprises lowering the one or more foldable rotation rotors such that the one or more foldable blades are resting in one or more cavities on a wing.

In some cases the method further comprises flying the fixed wing aircraft using foldable auto-rotation rotors functioning in a horizontal orientation.

### BRIEF DESCRIPTION OF THE DRAWINGS

Exemplary non-limited embodiments of the disclosed subject matter will be described, with reference to the following description of the embodiments, in conjunction with the figures. The figures are generally not shown to scale and any sizes are only meant to be exemplary and not necessarily limiting. Corresponding or like elements are optionally designated by the same numerals or letters.
Figure 1A shows a fixed wing aircraft comprising two foldable auto-rotation rotors in a substantially vertically expanded orientation, according to some exemplary embodiments of the subject matter;
Figure 1B shows a fixed wing aircraft comprising two foldable auto-rotation rotors in an expanded horizontal orientation, according to some exemplary embodiments of the subject matter;
Figure 1C shows a fixed wing aircraft comprising two foldable auto-rotation rotors in a folded horizontal orientation, according to some exemplary embodiments of the subject matter;
Figure 2 shows a side view of a fixed wing aircraft comprising two foldable auto-rotation rotors in an expanded substantially vertical orientation, according to some exemplary embodiments of the subject matter;
Figure 3A shows a side section of a fixed winged aircraft comprising one foldable auto-rotation rotor in an expanded substantially vertical orientation, according to some exemplary embodiments of the subject matter;
Figure 3B shows a fixed winged aircraft comprising one foldable auto-rotation rotor, according to some exemplary embodiments of the subject matter;
Figure 4A shows a fixed wing aircraft comprising four foldable auto-rotation rotors in an expanded substantially vertical orientation, according to some exemplary embodiments of the subject matter;
Figure 4B shows a fixed wing aircraft comprising four foldable auto-rotation rotors in a folded horizontal orientation, according to some exemplary embodiments of the subject matter;
Figure 5 shows a side view of a fixed winged aircraft comprising four foldable auto-rotation rotors in an expanded substantially vertical orientation, according to some exemplary embodiments of the subject matter;
Figure 6A shows a foldable auto-rotation rotor with foldable blades expanded, according to some exemplary embodiments of the subject matter;
Figure 6B shows a foldable auto-rotation rotor with foldable blades folded, according to some exemplary embodiments of the subject matter;
Figure 7 shows a transceiver for remote controlling an airplane comprising one or more foldable auto-rotation rotors, according to some exemplary embodiments of the subject matter

### DETAILED DESCRIPTION

The subject matter discloses a fixed wing aircraft comprising one or more foldable auto-rotation rotors with folding and retraction capabilities, according to exemplary embodiments. The one or more foldable auto-rotation rotors enable the fixed wing aircraft to fly with autogyro capabilities, such as performing vertical liftoffs and steep landing, as well as comprising fixed wing aircraft capabilities, such as achieving high speed flight, aerial maneuverability, and reduced vibrations of the fixed wing aircraft. The one or more foldable auto-rotation rotors operate on the fixed wing aircraft, for example on top or underneath a fuselage, a wing, or as part of the wing of the fixed wing aircraft. Each one of the one or more foldable auto-rotation rotors comprises one or more foldable blades, which enable the fixed wing aircraft to fly with the foldable auto-rotation rotors expanded or folded. During lift-off, the fixed wing aircraft may lift-off either like any other fixed wing aircraft, by using a runway and high speeds to achieve lift, or in cases of limited space the fixed wing aircraft may jump start by engaging the one or more foldable auto-rotation rotors to lift-off to achieve a vertical takeoff. The fixed winged aircraft may be transiently flown with the foldable auto rotation rotors folded such that the fixed wing aircraft flies as a standard fixed wing aircraft, or expanded such that the fixed wing aircraft flies using autogyro capabilities.

In midflight the fixed wing aircraft is enabled to stop the one or more foldable auto-rotation rotors, fold the one or more foldable blades, store the one or more foldable auto-rotation rotors, and continue flying as a standard fixed wing aircraft. The foldable auto-rotation rotors may be stopped or started using either a mechanical device, such as a brake, or an electronic device. The folded one or more foldable auto-rotation rotors may be stored by resting the one or more foldable auto-rotation rotors on one or more booms, where each foldable auto-rotation rotor of the one or more foldable auto-rotation rotors is stored on each boom of the one or more booms. The one or more rotors are connected to the fixed wing aircraft by one or more masts, where each mast of the one or more masts connects one foldable auto-rotation rotor of the one or more foldable rotation rotors to the fixed wing aircraft. When the fixed wing aircraft is to be flown using the one or more foldable auto-rotation rotors, the foldable blades are expanded and the fixed wing aircraft is achieves a flying speed in which the foldable auto-rotation rotors are capable of functioning. When the fixed wing aircraft arrives at a destination and landing is desired, if there is a runway, the fixed wing aircraft may be landed like a standard fixed wing aircraft. Where there is a lack of sufficient area to land the fixed wing aircraft lands using the one or more foldable auto-rotation rotors to perform a steeper landing. In cases of emergency the one or more auto-rotation rotors may be used to achieve a safe landing on almost any terrain.

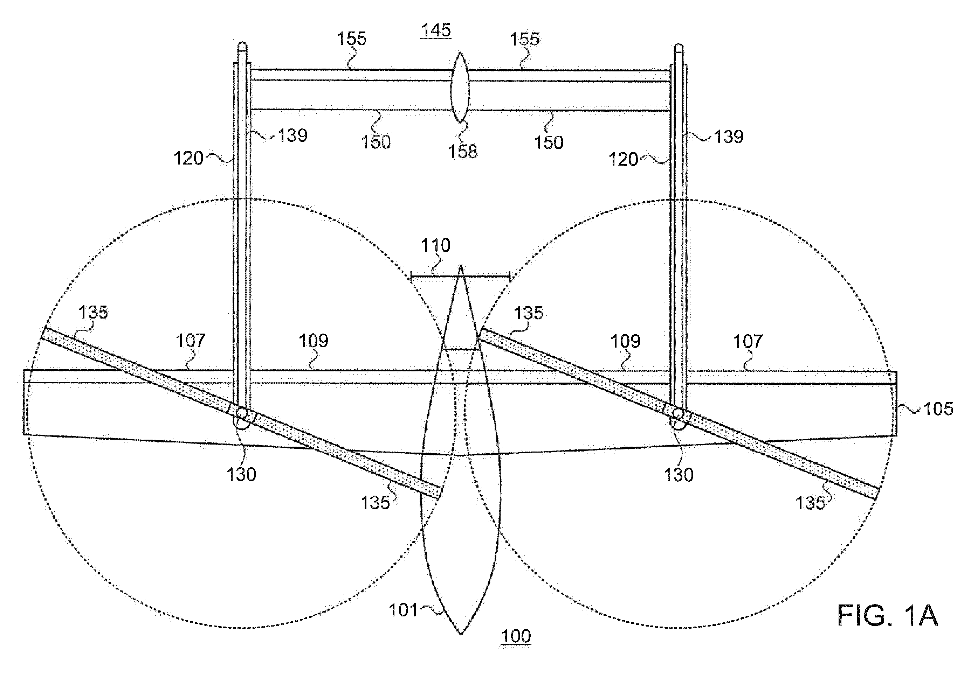

Figure 1A shows a fixed wing aircraft comprising two foldable auto-rotation rotors in an expanded substantially vertical orientation, according to some exemplary embodiments of the subject matter. The fixed wing aircraft 100 comprises a propeller 110, which gives the fixed wing aircraft 100 a forward momentum. The fixed wing aircraft 100 comprises a wing 105, which comprises ailerons 107 and flaps 109 to create lift and maneuver the fixed wing aircraft 100. The ailerons 107 and flaps 109 maneuver the fixed wing aircraft 100 together with a tail 145 comprising stubs 150, elevators/rudders 155 and a bullet 158. The tail 145 is attached to the fixed wing aircraft 100 by two booms 120, which are connected on the wing 105 to the fixed wing aircraft 100. The wing 105 is connected to a fuselage 101 of the fixed wing aircraft 100 in a high-wing manner, where the wing 105 is located on the top of the fuselage 101. In other exemplary embodiments of the subject matter, the wing 105 may comprise all possible combinations of wings connected to the fuselage 101, for example one wing connected to the each side of the fuselage 101. The wing 105 comprises two foldable auto-rotation rotors 130, where each one of the two foldable auto-rotation rotors 130 comprises two foldable blades 135. The two foldable blades 135 are used to create lift of the fixed wing aircraft 100 while the two foldable blades 135 are spun. It should be noted that even though the two foldable auto-rotation rotors 130 are used to create lift, and in some cases create most of the lift, the wing 105 is also required to create some of the lift of the fixed wing aircraft 100.

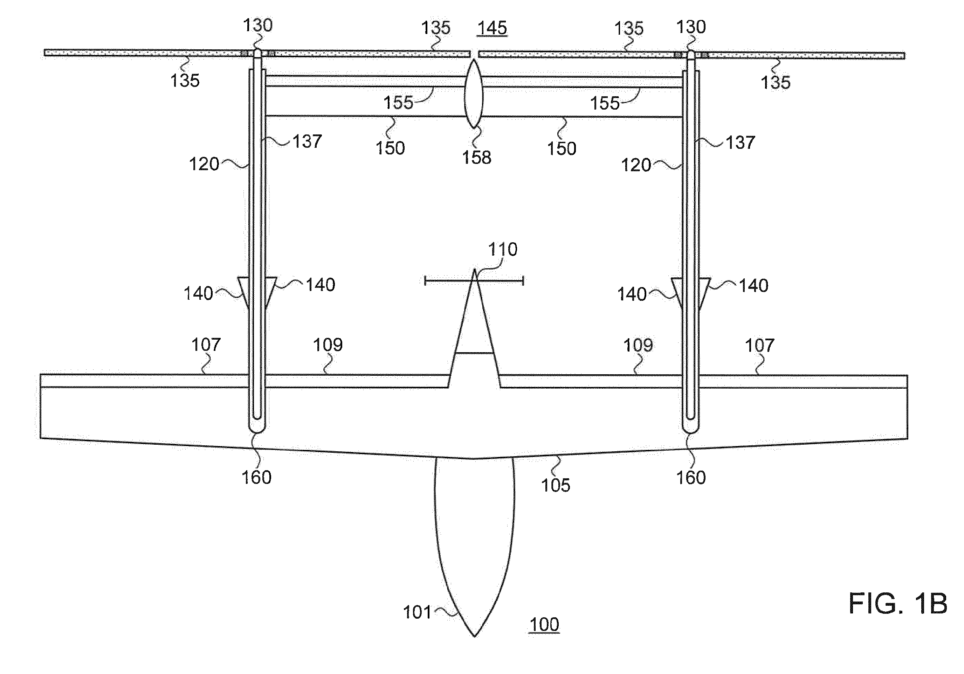

Figure 1B shows a fixed wing aircraft comprising two foldable auto-rotation rotors in an expanded horizontal orientation, according to some exemplary embodiments of the subject matter. The fixed wing aircraft 100 comprises of two masts 137, where each mast of the two masts 137 connects a foldable auto-rotation rotor of the two foldable auto-rotation rotors 130 to the wing 105. Each foldable auto-rotation rotor of the two foldable auto-rotation rotors 130 rests in a cavity 139 located in a boom of the two booms 120. The two foldable auto-rotation rotors 130 extend behind the tail 145 such that the two foldable blades 135 may be expanded behind the fixed wing aircraft 100. When the fixed wing aircraft 100 is transitioning into using the two foldable auto-rotation rotors 130 the two foldable blades 135 are expanded, and the two foldable auto-rotation rotors 145 are lifted to the substantially vertical orientation as shown in Figure 1A. When the fixed wing aircraft 100 stopped the two foldable auto-rotation rotors 130, the two foldable auto-rotation rotors 130 are lowered with the two foldable blades 135 still expanded. In some exemplary embodiments of the subject matter, the two foldable blades 135 may be short foldable blades, which are enabled to create on and off drag for the fixed wing aircraft 100.

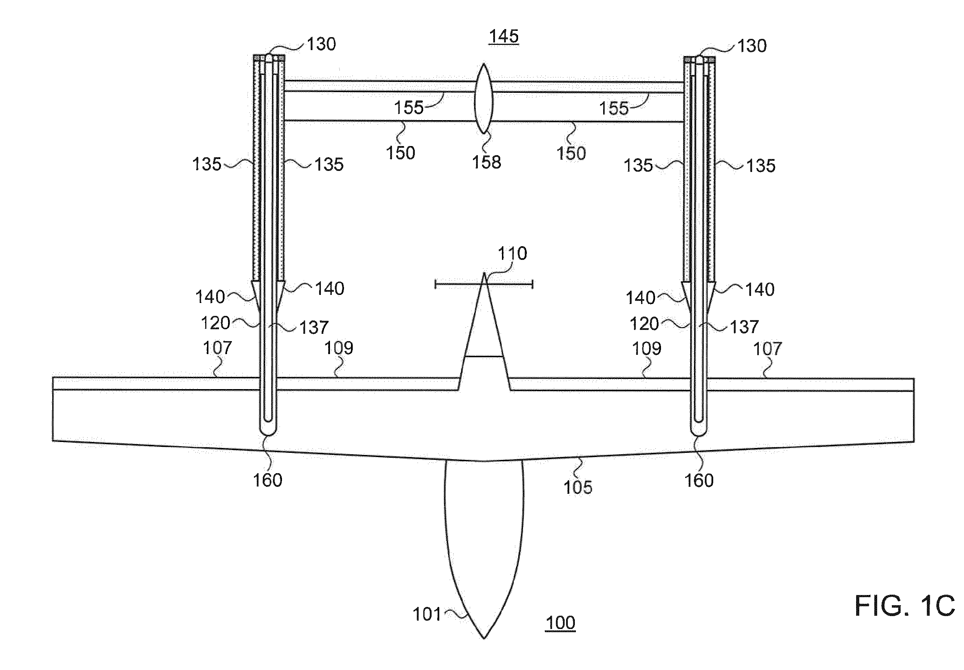

Figure 1C shows a fixed wing aircraft comprising two foldable auto-rotation rotors in a folded horizontal orientation, according to some exemplary embodiments of the subject matter. The fixed wing aircraft 100 may fly as a standard fixed wing aircraft without the two foldable auto-rotation rotors 130 functioning. Each foldable auto-rotation rotor of the two foldable auto-rotation rotors 130 is in a horizontal orientation resting in the cavity 139 of a boom of the two booms 120. The two foldable blades 135 of each foldable auto-rotation rotor of the two foldable auto-rotation rotors 130 are folded so each foldable blade of the two foldable blades 135 rests on the side of the boom of the two booms 120. Each side of the boom of the two booms 120 comprises blade covers 140, which protect the two foldable blades 135 while the two foldable blades 135 rest on the side of the boom of the two booms 120. In some exemplary embodiments of the subject matter, the two foldable blades 135 are folded onto the mast of the two masts 137 and rest inside the cavity 139 with each foldable auto-rotation rotor of the two foldable auto-rotation rotors 130.

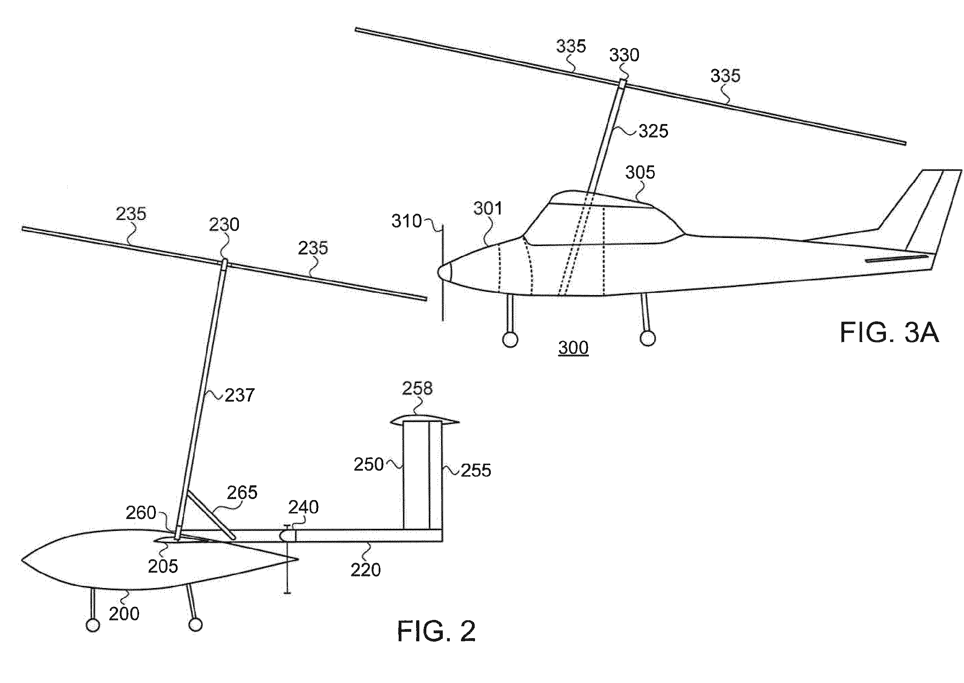

Figure 2 shows a side view of a fixed wing aircraft comprising two foldable auto-rotation rotors in an expanded substantially vertical orientation, according to some exemplary embodiments of the subject matter. The fixed wing aircraft 200 comprises a wing 205. The fixed wing aircraft 200 comprises two booms 220, which connect a tail to the fixed wing aircraft 200. The tail comprises stubs 250, elevator/rudders 255, and a bullet 258, which control the fixed wing aircraft 200 with flaps (not shown) and ailerons (not shown) located on the wing 205. The wing 205 comprises two foldable auto-rotation rotors 230, where a foldable auto-rotation rotor of the two foldable auto-rotation rotors 230 comprises two foldable blades 235. The foldable auto-rotation rotor of the two foldable auto-rotation rotors 230 comprises a mast 237, which connects the foldable auto-rotation rotor of the two foldable auto-rotation rotors 230 to the wing 205. The mast 237 is connected to the wing 205 by a socket 260, which is a moveable piece which enables each mast of the two masts 237 to be lowered to a horizontal orientation and onto a cavity 255 located in the center of a boom of the two booms 220. The socket 260 enables the mast of the two masts to be raised to a substantially vertical orientation. The mast 237 of the foldable auto-rotation rotor of the two foldable auto-rotation rotors 230 is connected to the boom of the two booms 240 with a link 265, which elevates and lowers the mast of the two masts 237. The two foldable auto-rotation rotors 230 are angled vertically and rearwards on a disk plane towards the rear of the fixed wing aircraft 200. This vertical and rearward angle of the two foldable auto-rotation rotors 230 enables the two foldable blades 235 to spin up and create lift.

Figure 3A shows a side section of a fixed winged aircraft comprising a foldable auto-rotation rotor in an expanded substantially vertical orientation, according to some exemplary embodiments of the subject matter. The fixed wing aircraft 300 comprises of the foldable auto-rotation rotor 330 which is connected to the top of the fixed wing aircraft 300. The foldable auto-rotation rotor 330 comprises of two blades 335, which in this exemplary embodiment do not have to be foldable. The foldable auto-rotation rotor 330 comprises of a mast 325, which extends into the interior of the fixed wing aircraft 100. The mast 325 is enabled to be raised or lowered, for example, by the use of a hydraulic which lengthens and shortens the length of the mast 325. The foldable auto-rotation rotor 330 is angled vertically and rearwards on the disk plane towards the rear of the fixed wing aircraft 300. This vertical and rearward angle of the two foldable auto-rotation rotors 330 enables the two blades 335 to spin up and create lift.

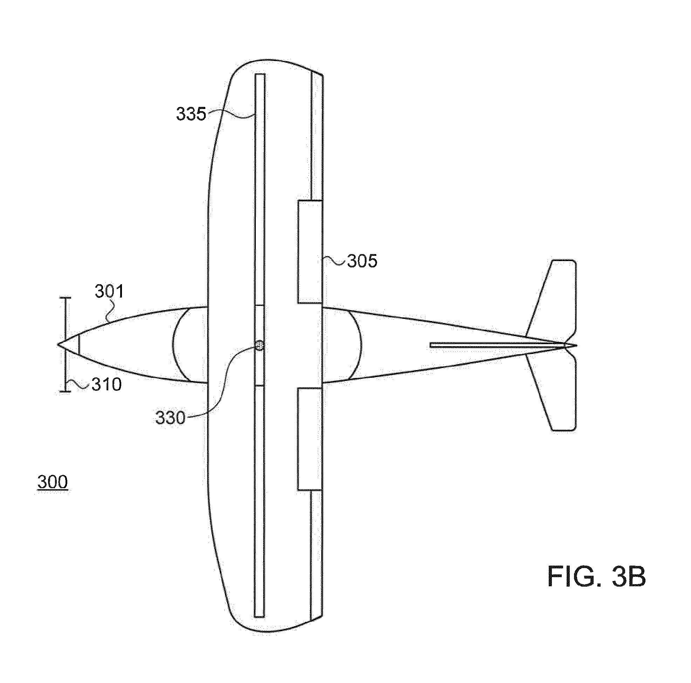

Figure 3B shows a fixed winged aircraft comprising a foldable auto-rotation rotor, according to some exemplary embodiments of the subject matter. A wing 305 comprises a cavity (not shown), is sized to the exact size of each foldable auto-rotation rotor 330. The foldable auto-rotation rotor 330 is stored in the cavity when the fixed wing aircraft 300 is not using the foldable auto-rotation rotor 330 to create lift. When the foldable auto-rotation rotor 330 is not used to create lift, the foldable auto-rotation rotor 330 is stopped in such a manner so the two foldable blades 335 stop right above the cavity, for example using a mechanical braking system or an electrical breaking system. The mast 325 is lowered until the foldable auto-rotation rotor 330 and the two blades 335 are resting in the cavity. When the foldable auto-rotation rotor 330 is to be used to create lift, the mast 325 is extended and the foldable auto-rotation rotor 330 is started so the two blades 335 spin and create lift. The foldable auto-rotation rotor 330 may be started using either the wind surrounding the fixed wing aircraft 300 or by a motor (not shown) to start the foldable auto-rotation rotor 330.

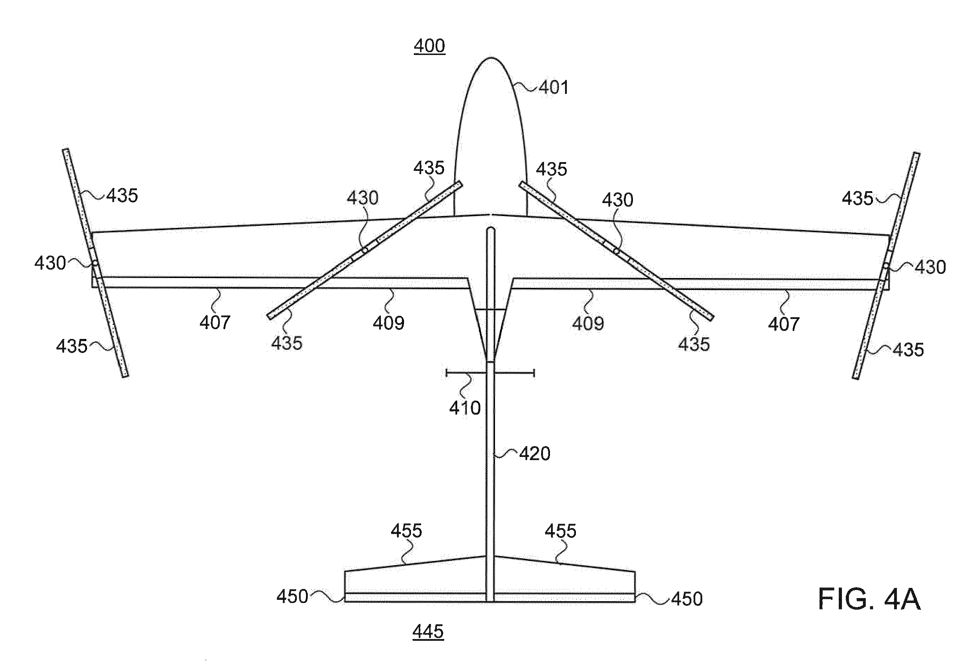

Figure 4A shows a fixed wing aircraft comprising four foldable auto-rotation rotors in an expanded substantially vertical orientation, according to some exemplary embodiments of the subject matter. The fixed wing aircraft 400 comprises a propeller 410 to create forward momentum. The fixed wing aircraft comprises a single boom 420 connected to a tail 445 comprising of stubs 455 and elevator/rudders 450, which are used to control the fixed wing aircraft 400 along with flaps 409 and ailerons 407 located on a wing 405. The wing 405 comprises four foldable auto-rotation rotors 430, where each foldable auto-rotation rotor of the foldable four auto-rotation rotors 430 comprises of two foldable blades 435. The fixed wing airplane 400 may be flown with the four foldable auto-rotation rotors 4 active, where the foldable four auto-rotation rotors 430 are used to create life of the fixed wing aircraft 400. The four foldable auto-rotation rotors 430 enable the fixed wing air to perform short takeoffs and steep landings are desired.

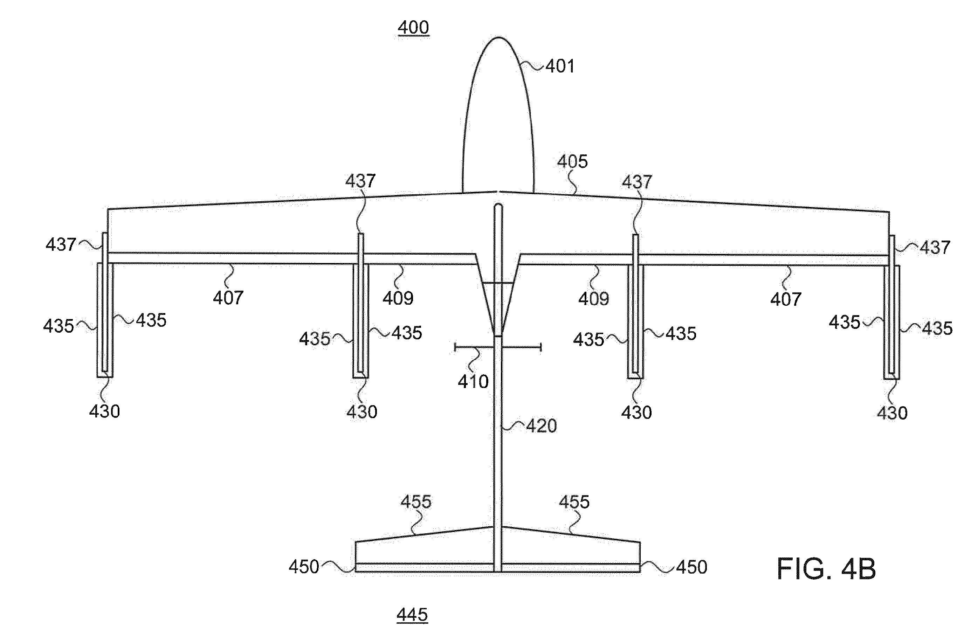

Figure 4B shows a fixed wing aircraft comprising four foldable auto-rotation rotors in a folded horizontal orientation, according to some exemplary embodiments of the subject matter. While the fixed wing aircraft 400 is flying, the fixed winged aircraft 400 is enabled to simultaneously stop the four foldable auto-rotation rotors 430, fold the two foldable blades 435 of each foldable auto-rotation rotor of the four foldable auto-rotation rotors 430 around a mast 437, and simultaneously retract the four foldable auto-rotation rotors 430 to a horizontal orientation. The four foldable auto-rotation rotors 430 are stopped and lowered to a horizontal orientation so that each foldable auto-rotation rotor of the four foldable auto-rotation rotors 430 is resting on the wing 405 or in a cavity (not shown) in the wing 405. The four foldable auto-rotation rotors 430 are located on the wing 405 in such a manner so that when the four foldable auto-rotation rotors 430 are in the horizontal orientation, the four foldable auto-rotation rotors 430 do not interfere with the functioning of the flaps 409 and the ailerons 407.

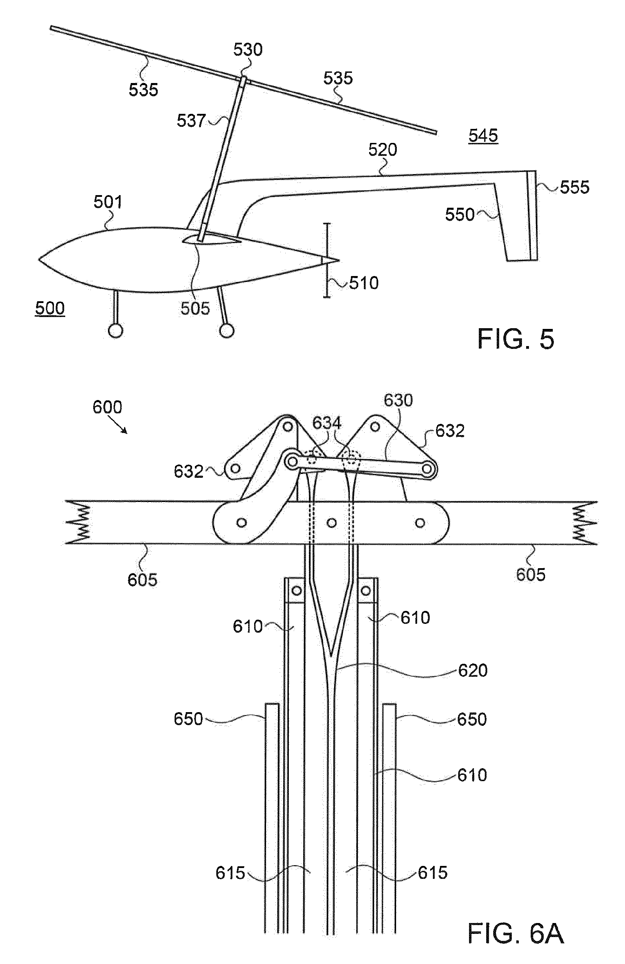

Figure 5 shows a side view of a fixed winged aircraft comprising four foldable auto-rotation rotors in an expanded substantially vertical orientation, according to some exemplary embodiments of the subject matter. In this exemplary embodiment, the fixed wing aircraft 500 comprises a boom 520 which is connected on top of a wing 505, in such a manner that a propeller 510 is connected to the fixed wing aircraft 500 underneath the boom 520. The boom 520 is connected to a reverse V tail 525, where the stubs 550 and the rudders/elevators 555 are connected on top and extend downwards. The four foldable auto-rotation rotors 530 are angled vertically and rearwards on a disk plane towards the rear of the fixed wing aircraft 500. This vertical and rearward angle of the two foldable auto-rotation rotors 530 enables the two foldable blades 535 to spin up and create lift.

Figure 6A shows a foldable auto-rotation rotor with foldable blades expanded, according to some exemplary embodiments of the subject matter. The foldable auto-rotation rotor 600 comprises of two foldable blades 605, which extend in opposite directions from the foldable auto-rotation rotor 600. A foldable blade of the two foldable blades 605 is connected to a limb 630, which connects to a triangle plate 632. The foldable blade of the two foldable blades 605 is connected to a base plate 645 by a base bolt 640, which enables each foldable blade of the two foldable blades 605 to expand or fold. The triangle plate 632 is a moveable unit, which enables each foldable blade of the two foldable blades 605 to fold and expand. The triangle plate 632 is connected by a ball baring bolt 634 and to a push/pull rod 620. The push/pull rod 620 folds each foldable blade when it is raised, and expands each foldable blade when it is lowered. The push/pull rod 620 sits inside an internal mast 615 which spins with the auto-rotation rotor 600. The internal mast 615 sits inside a mast 610, which connects the foldable auto-rotation rotor 600 to the fixed wing aircraft. In some cases, the two foldable blades 605 may be expanded while the mast 610 is resting inside a cavity of a boom 650.

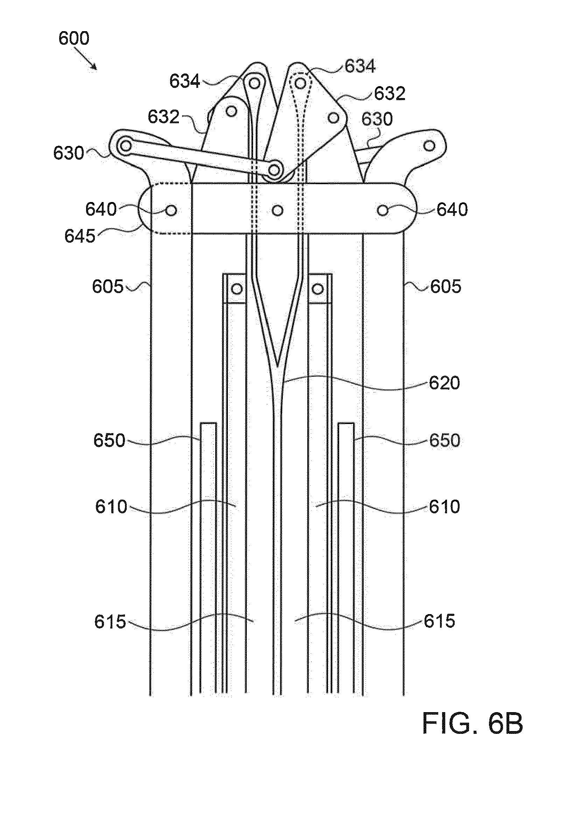

Figure 6B shows a foldable auto-rotation rotor with foldable blades folded, according to some exemplary embodiments of the subject matter. To fold the two foldable blades 605 the push/pull rod 620 is raised, which turns the triangle plate 632 and pushes the limb 630, which folds a foldable blade of the two foldable blades 605 connected to the limb 630. The two foldable blades 605 fold until each foldable blade of the two foldable blades 605 rests on one side of the boom 650. In some exemplary embodiments of the subject matter, each foldable blade of the two foldable blades 650 rests on the mast 610 rather than on the boom 650.

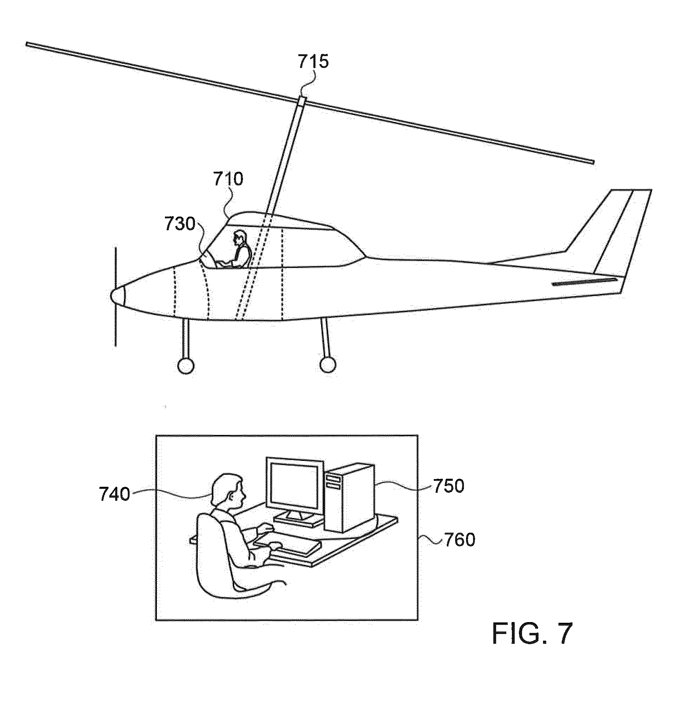

Figure 7 shows a transceiver for remote controlling a fixed wing aircraft comprising one or more foldable auto-rotation rotors, according to exemplary embodiments of the subject matter. The fixed wing aircraft 700 is enabled to carry a pilot 720, who controls the fixed wing aircraft 710 and may determine whether to fly the fixed wing aircraft 700 using the one or more foldable auto-rotation rotors 715. In some exemplary embodiments of the subject matter, the fixed wing aircraft 710 may be an unmanned aerial vehicle, which is controlled by a person 740 at a different location, such as a building 760 on the ground. The person 740 uses a controlling unit 750 to communicate with a transceiver 730 located on the fixed wing aircraft 710. The transceiver 730 is connected to controls of the fixed wing aircraft 710 and enables the person 740 to start or stop the foldable auto-rotation rotors 715 while the fixed wing aircraft is flying. The person 740 may control the orientation of the one or more foldable auto-rotation rotors 715, so that the one or more foldable auto-rotation rotors 715 are substantially vertically oriented to create lift or the one or more foldable auto-rotation rotors 715 are horizontally oriented to fly as a standard fixed wing aircraft.

While the disclosure has been described with reference to exemplary embodiments, it will be understood by those skilled in the art that various changes may be made and equivalents may be substituted for elements thereof without departing from the scope of the subject atter. In addition, many modifications may be made to adapt a particular situation or material to the teachings without departing from the essential scope thereof. Therefore, it is intended that the disclosed subject matter not be limited to the particular embodiment disclosed as the best mode contemplated for carrying out this subject matter, but only by the claims that follow.

## Claims

1. A fixed wing aircraft comprising:
one or more foldable auto-rotation rotors operating on the fixed wing aircraft,
each of the one or more foldable auto-rotation rotors comprising one or more foldable blades;
wherein the one or more foldable auto-rotation rotors are stopped while the fixed wing aircraft is flying;
wherein the one or more foldable auto-rotation rotors are started while the fixed wing aircraft is flying;
wherein the one or more foldable blades are folded while the fixed wing aircraft is flying;
wherein the one or more foldable blades are expanded while the fixed wing aircraft is flying;
one or more masts, each of the one or more masts connects a foldable auto-rotation rotor of the one or more foldable auto-rotation rotors to the fixed wing aircraft;
wherein the one or more masts are foldable while the fixed wing aircraft is flying;
wherein the one or more masts are expanded while the fixed wing aircraft is flying;
wherein the one or more masts are positioned vertically and rearwards;
wherein a disk plane of the one or more auto-rotation rotors is positioned vertically and rearwards with respect to the fixed wing aircraft during forward flight.

2. The fixed wing aircraft of claim 1, further comprising:
one or more sockets, each socket of the one or more sockets connecting each mast of the one or more masts to the fixed wing aircraft;
each socket of the one or more sockets is enabled to move from a substantially vertical orientation to a horizontal orientation;
wherein each socket of the one or more sockets is enabled to move from the horizontal orientation to the substantially vertical orientation.

3. The fixed winged aircraft of claim 2, wherein the one or more masts are folded and expanded along a vertical direction only.

4. The fixed wing aircraft of claim 1, further comprising one or more booms, each boom of the one or more booms comprises a cavity to store the foldable auto-rotation rotors of the one or more foldable auto-rotation rotors are stopped.

5. The fixed wing aircraft of claim 1, further comprises a wing, said wing further comprises one or more cavities, each cavity of the one or more cavities stores the foldable auto-rotation rotor of the one or more foldable auto-rotation rotors.

6. The fixed wing aircraft of claim 1, wherein the one or more foldable auto-rotation rotors are two or more foldable auto-rotation rotors connected to an engine to synchronize the rotation speed of at least two of the two or more foldable auto-rotation rotors.

7. The fixed wing aircraft of claim 1, further comprises a transceiver for receiving commands from a control unit controlling the one or more foldable auto-rotation rotors.

8. The fixed wing aircraft of claim 1, further comprising:
one or more booms, each boom of the one or more booms stores the foldable auto-rotation rotor of the one or more foldable rotation rotors;
the one or more foldable blades of the foldable auto-rotation rotor of the one or more foldable auto-rotation rotors fold onto the sides of the boom of the one or more booms.

9. The fixed wing aircraft of claim 1, wherein the foldable blades fold to enclose around the mast when the one or more foldable auto-rotation rotors are stopped.

10. A method for operating a fixed-wing aircraft, comprising:
taking off the fixed wing aircraft with foldable auto-rotation rotor functionalities,
said foldable auto-rotation rotor comprises foldable blades;
flying the fixed wing aircraft with foldable auto-rotation rotor functionalities;
stopping the one or more foldable blades while flying the fixed wing aircraft;
folding the one or more foldable blades while flying the fixed wing aircraft;
flying the fixed wing aircraft with the foldable blades folded;
expanding the foldable blades while flying the fixed wing aircraft;
flying the fixed wing aircraft with one or more foldable blades expanded;
landing the fixed wing aircraft with foldable auto-rotation rotor functionalities.

11. The method according to claim 10, further comprising lowering the one or more foldable auto-rotation rotors to rest on one or more booms, wherein a boom of the one or more booms holds an foldable auto-rotation rotor of the one or more foldable auto-rotation rotors.

12. The method according to claim 10, wherein the two foldable blades of the foldable auto-rotation rotors of the one or more foldable auto rotation rotors fold onto the sides of the boom of the one or more booms.

13. The method according to claim 10, wherein the two foldable blades of the foldable auto-rotation rotor of the one or more foldable auto rotation rotors fold and rest the foldable auto-rotation rotor of the one or more foldable auto rotation rotors inside a cavity of the boom of the one or more booms.

14. The method according to claim 10, further comprising lowering the one or more foldable rotation rotors such that the one or more foldable blades are resting in one or more cavities on a wing.

15. The method according to claim 10, further comprises flying the fixed wing aircraft using foldable auto-rotation rotors functioning in a horizontal orientation.
